# EUROPÄISCHE PATENTSCHRIFT

(11) **EP 3 204 299 B1**
(45) Veröffentlichungstag und Bekanntmachung des Hinweises auf die Patenterteilung: **17.10.2018**
(21) Anmeldenummer: 15783946.5
(22) Anmeldetag: 22.10.2015
(51) Int. Cl.: B65B 31/02, A23L 3/015, A47F 7/00, A47B 77/08, A47B 77/16, B65B 51/14, B65D 81/20

(54) **VAKUUMSCHUBLADE ZUM VAKUUMIEREN VON LEBENSMITTELN MIT BETÄTIGBAREM DECKEL**
VACUUM DRAWER FOR VACUUM-SEALING FOODSTUFFS, COMPRISING AN ACTUATABLE COVER
TIROIR À VIDE À COUVERCLE ACTIONNABLE POUR METTRE SOUS VIDE DES DENRÉES ALIMENTAIRES

(30) Priorität: 24.10.2014 DE 102014015788
(43) Veröffentlichungstag der Anmeldung: 16.08.2017
(73) Patentinhaber: MICHATEK, k.s., 07101 Michalovce (SK)
(72) Erfinder: BOCKS, Stefan, 83112 Frasdorf (DE); KOFLER, Robert, 6334 Schwoich (AT); WEWECK, Alexander, 83134 Prutting (DE); HARLANDER, Florian, 6342 Niederndorf (AT); KOPFENSTEINER, Peter, 6341 Ebbs (AT)
(74) Vertreter: Zinnecker, Armin
(86) Internationale Anmeldenummer: PCT/EP2015/002095
(87) Internationale Veröffentlichungsnummer: WO 2016/062406

(56) Entgegenhaltungen:
- EP-A1- 2 062 823
- EP-A2- 0 405 680
- WO-A1-02/10017
- JP-A- 2010 267 750

## Beschreibung

Die Erfindung betrifft eine Vakuumschublade zum Vakuumieren von Lebensmitteln mit einer Vakuumkammer, die durch einen betätigbaren Deckel luftdicht verschließbar ist, wobei der Deckel zumindest teilweise aus Glas besteht.

Vakuumiergeräte umfassen eine Vakuumkammer, in die ein geeignetes Behältnis, beispielsweise in Form eines versiegelbaren Beutels, eingelegt wird. Innerhalb der Kammer erstreckt sich ein Schweißbalken, der in vertikaler Richtung höhenverstellbar ist. Das mit dem Lebensmittel befüllte Behältnis wird in die Vakuumkammer eingelegt und diese im Anschluss über einen Deckel luftdicht verschlossen, um mittels einer Vakuumpumpe ein Vakuum in der Kammer zu erzeugen. Der anschließend betätigte Schweißbalken verschweißt durch Zuführung von Schweißenergie das Behältnis.

Bekannt sind ebenfalls Vakuumiergeräte, die speziell für den Einsatz in Schubladen, insbesondere Küchenmöbel, konstruiert sind. Aus Designgründen, insbesondere beim Einsatz der Vakuumschublade für Küchenmöbel, ist es wünschenswert, dass der Deckel des Vakuumiergerätes zumindest teilweise aus Glas besteht. Die Verwendung eines gläsernen Deckels birgt jedoch das Risiko eines Scheibenbruchs, der bei Vorherrschen eines Kammervakuums aufgrund des Druckunterschiedes zur Implosion führen kann. Die in die Vakuumkammer gelangenden Bruchstücke können durch den Aufprall auf die Kammerwandung zurückgeschleudert und zur Gefahr für umstehende Personen oder Gegenstände werden.

Ein solches Vakuumiergerät mit einem Deckel, der mit einer Glasscheibe versehen ist, zeigt beispielsweise die Schrift WO 02/10017 A1. Weitere Vakuumgeräte sind aus den Schriften JP 2010 267750 A, EP 20 62 823 A1 oder EP 04 05 680 A2 bekannt.

Bisher wurden diverse Überlegungen zur Verringerung des beschriebenen Risikos angestellt. Die Verwendung eines Kunststoffdeckels, so zum Beispiel aus Plexiglas, genügt allerdings nicht den gestellten Ansprüchen an das Design des Gerätes. Zudem wäre eine enorme Stärke des Plexiglases notwendig, wodurch nachteilig nutzbares Kammervolumen verloren gehen würde. Die Verwendung bekannter Splitterschutzfolien bietet keine ausreichende Festigkeit. Zudem haften derartige Folien nur unbefriedigend auf Glas, sodass es auch hier bei Scheibenbruch zur gefährlichen Splitterbildung kommen kann.

Die Aufgabe der vorliegenden Erfindung besteht darin, eine alternative Variante zur Ausbildung des Deckels einer Vakuumschublade aufzuzeigen, die den voranstehend diskutierten Sicherheitsanforderungen gerecht wird.

Gelöst wird diese Aufgabe durch eine Vakuumschublade gemäß den Merkmalen des Anspruchs 1. Erfindungsgemäß wird ein Deckel aus Glas oder zumindest einen Glasanteil umfassend eingesetzt, wobei der Glasanteil des Deckels einen Verbund von zwei oder mehr Glasscheiben umfasst, die zumindest teilweise flächig überlappend angeordnet sind. Die Glasscheiben sind vorzugsweise derart angeordnet, so dass jede intakte Glasscheibe für sich genommen die Vakuumkammer luftdicht verschließt bzw. Luft nur sehr langsam in die Kammer eintreten kann. Der Vorteil des erfindungsgemäßen Systems besteht darin, dass auch bei Bruch einer der verwendeten Scheiben das Vakuum durch die wenigstens eine intakte Scheibe gehalten und eine gefährliche Implosion, die zur unkontrollierten Splitterung einer gebrochenen Glasscheibe führen würde, vermieden wird.

Vorzugsweise ist der Deckel nahezu vollständig aus zwei überlappend angeordneten Glasscheiben gebildet. Notwendige Bauteile wie Dichtungen, Scharniere oder Randverkleidungen können aus abweichenden Materialien gebildet sein. Die Form der Glasscheiben definiert daher im Wesentlichen die Deckelform.

Die zwei oder mehreren Glasscheiben können flächig miteinander verbunden, bevorzugt verklebt sein. Die Verbindung, insbesondere Verklebung, kann vollflächig oder punktuell sein. Die Verklebung kann auch über eine Kontur am Rand erfolgen. Die zwei bzw. benachbarte Glasscheiben können beabstandet miteinander verbunden bzw. zueinander fixiert sein. Die Beabstandung kann über ein oder mehrere zwischen benachbarten Glasscheiben eingesetzte Abstandshalter bzw. Abstandprofile erfolgen. Die beabstandet angeordneten Glasscheiben können mittels Verkleben zueinander fixiert bzw. mittels Vakuum innerhalb des gebildeten Hohlraums zwischen benachbarten Glasscheiben gegeneinander fixiert sein. In letzterem Fall werden die Glasscheiben nur durch das vorherrschende Vakuum fixiert. Denkbar ist selbstverständlich auch eine Mischung aus Vakuumfixierung sowie Verkleben der Glasscheiben. Denkbar ist ebenso eine Verklebung der Glasscheiben mittels doppelseitigen Klebebands, insbesondere mit einer Stärke von mindestens 1mm, bevorzugt mindestens 2mm, so dass die Glasscheiben beabstandet zueinander sind. Der Hohlraum zwischen den Glasscheiben kann ebenfalls mit einem inerten Gas gefüllt sein, damit die Scheiben auf Dauer hochtransparent und durchsichtig bleiben.

Die beabstandete Anordnung der wenigstens zwei Glasscheiben hat den Vorteil, dass randseitig zumindest bereichsweise eine Nut entsteht, die zur Aufnahme ein oder mehrerer Dichtungen, insbesondere Dichtlippen geeignet ist. Bisher war die Befestigung der notwendigen Dichtung zwischen Deckel und Kammer kompliziert und unbefriedigend, da an der Wanne der Kammer keine Nut zur Dichtungsaufnahme wirtschaftlich sinnvoll gefräst werden konnte. Gleiches galt bisher bei der Verwendung eines konventionellen Glasdeckels mit einfacher Glasscheibe. Die Verwendung von wenigstens zwei Glasplatten und deren beabstandete Anordnung schafft auch ohne Fräsvorgang Raum zur Aufnahme einer Dichtung. Die resultierende randseitige Nut ermöglicht die einfache Montage eines auswechselbaren Klemmprofils in Form einer Lippendichtung am Deckel.

Die Montage des Deckels an der Vakuumkammer kann vorzugsweise über ein oder mehrere Drehscharnier erfolgen. Die Drehscharniere sind gemäß einer Ausführungsform federgestützt, um den Deckel entweder in einer Position zu halten bzw. durch Vorspannung erzeugte Federkraft automatisch zu öffnen bzw. zu schließen. Idealerweise erfolgt die Anlenkung des Deckels über seitlich am Deckelrand befestigte Drehscharniere. Sinnvoll ist der Einsatz von zwei Drehscharnieren, die jeweils randseitig an gegenüberliegenden Seiten des Deckels an diesem angeordnet sind.

Als sinnvoll erweist sich auch eine lösbare Befestigung des feststehenden Scharnierteils des wenigstens einen Drehscharniers am Kammerkorpus. Die lösbare Anordnung erlaubt die einfache Demontage des Deckels, beispielsweise zu Reinigungs- oder Reparaturzwecken. Die lösbare Verbindung kann vorzugsweise in Form einer am Kammerkorpus ausgeprägten Lasche erfolgen, in die das Drehscharnier drehfest einhängbar ist und bedarfsweise entnommen werden kann.

Besonders bevorzugt ist es, wenn sich wenigstens ein Drehscharnier durch ein axiales Spiel in Richtung der Drehachse auszeichnet, um das Drehscharnier zur Deckeldemontage mittels Axialbewegung aus der Lasche des Kammerkorpus zu entnehmen. Besonders bevorzugt weisen beide randseitig am Deckel angeordneten Drehscharniere ein axiales Spiel auf, sodass dass diese zueinander bewegbar sind.

Zur Sicherung des Deckels am Korpus und zur Verhinderung, dass der Deckel aus Versehen demontiert wird, ist wenigstens ein Gleitstück vorgesehen, um das axiale Spiel des wenigstens einen Scharniers zu begrenzen bzw. vollständig zu blockieren. Das Gleitstück ist vorzugsweise klammerartig ausgeführt und kann im Bereich des Drehscharniers auf die Drehwelle am Deckel aufgesteckt werden. Eine griffartige Ausformung des Gleitstückes kann als Griff dienen, um das Gleitstück bequem von der Scharnierwelle für die nachfolgende Deckeldemontage abzuziehen. Idealerweise ist für die Drehscharniere mit axialem Spiel ein separates Gleitstück vorgesehen. Das Gleitstück kann aus elastischem bzw. flexiblem Material sein.

Die Scharnierbefestigung am Deckel kann gemäß einer besonders bevorzugten Ausgestaltung der Erfindung mittels eines rohrartigen Profils erfolgen, dass an dem an die Drehachse des Deckels angrenzenden Rand der Glasscheiben befestigt ist. Die endseitigen Rohröffnungen dienen idealerweise zur Aufnahme jeweils eines Drehscharniers. Die Befestigung des rohrartigen Profils am Deckel kann vorzugsweise mit Hilfe von zwei parallel abstehenden Flanken realisiert sein, die eine nutartige Öffnung entlang der Rohrlängsachse bilden. Das Profil kann demnach auf den Rand wenigstens einer Glasscheibe aufgesteckt werden. Denkbar ist es ebenfalls, dass zwei oder mehr überlappende Glasscheiben mit dem Profil verbunden sind.

Ein weiterer Aspekt der Erfindung betrifft die Verwendung der erfindungsgemäßen Vakuumschublade für ein Möbel, insbesondere für ein Küchenmöbel. Weiterhin umfasst die Erfindung ein Küchenmöbel mit der erfindungsgemäßen Vakuumschublade. Sowohl für die erfindungsgemäße Verwendung also auch das erfindungsgemäße Küchenmöbel gelten voranstehend diskutierten Vorteile und Eigenschaften, die bereits im Zusammenhang mit der erfindungsgemäßen Vakuumschublade bzw. einer vorteilhaften Ausgestaltung dieser ausführlich erläutert wurden. Auf eine wiederholende Beschreibung wird aus diesem Grund verzichtet.

Weitere Vorteile und Eigenschaften der Erfindung werden im Folgenden anhand eines in den Zeichnungen dargestellten Ausführungsbeispiels näher erläutert. Es zeigen:
- Figur 1:: diverse Darstellungen der erfindungsgemäßen Vakuumschublade,
- Figur 2:: Detaildarstellungen des erfindungsgemäßen Deckels der Vakuumschublade,

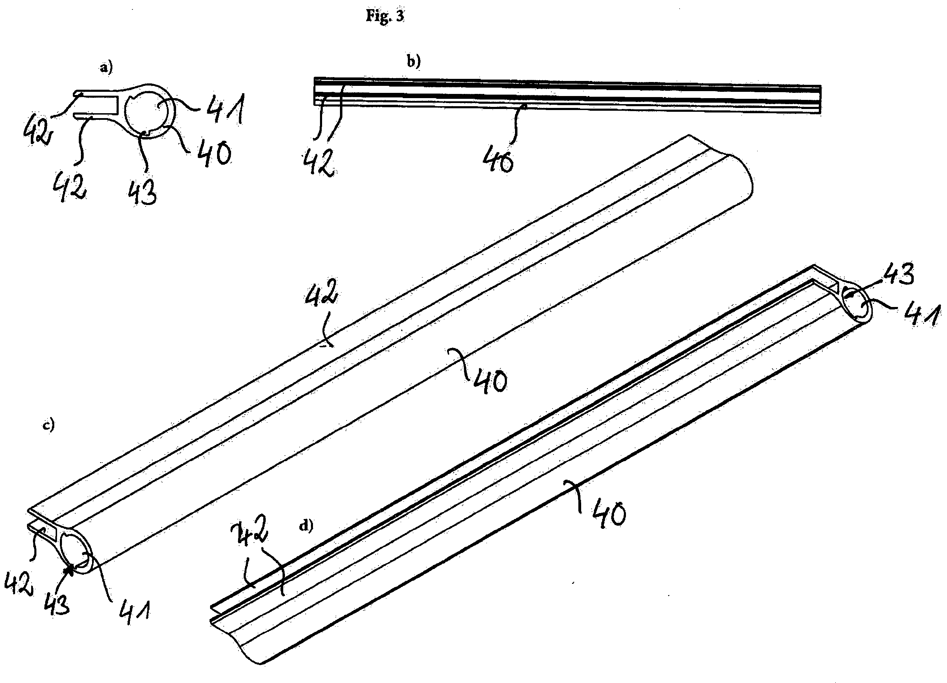

- Figur 3:: Detaildarstellungen des rohrartigen Profils für die Befestigung des Deckelteils am Schubladenkorpus,
- Figur 4:: Zwei Darstellungen der verwendeten Drehscharniere und
- Figur 5:: Unterschiedliche Darstellungen des Gleitstücks zur Begrenzung des axialen Spiels der Drehscharniere.

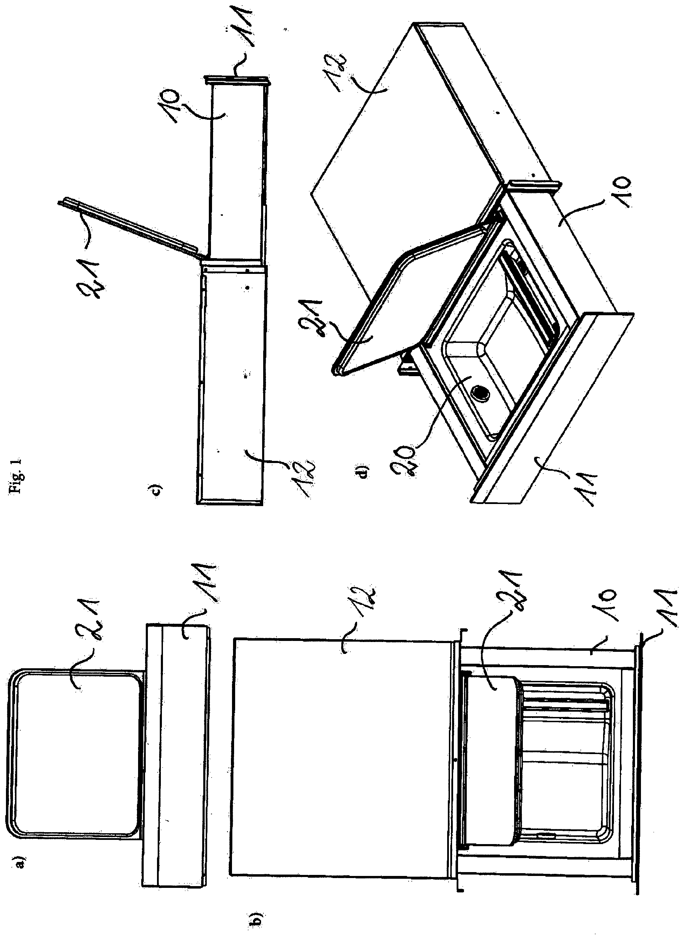

Figur 1 zeigt insgesamt vier unterschiedliche Darstellungen der erfindungsgemäßen Vakuumschublade. Figur 1a zeigt eine Rückansicht der Vakuumschublade, Figur 1b eine Draufsicht auf die Vakuumschublade, Figur 1c eine Seitenansicht und Figur 1d eine perspektivische Darstellung der Vakuumschublade. Die Schublade eignet sich für den Einsatz in einem Küchenmöbel, da sie sich durch eine Einbauhöhe von ca. 140 mm auszeichnet und demnach dem Normmaß von Einbauküchen entspricht.

Die Vakuumschublade umfasst einen Schubladenauszug 10, der in einem Schubladenkorpus 12 über seitliche Führungsschienen längsverschieblich geführt ist. Im dargestellten Ausführungsbeispiel ist die Frontabdeckung 11 grifflos, der Schubladenauszug ist als Push-Pull-Einrichtung zum Öffnen und Schließen konstruiert. Innerhalb des Schubladenauszuges ist eine Vakuumkammer 20 gelagert, die mit einer Vakuumpumpe der Vakuumschublade strömungstechnisch gekoppelt ist, um die Luft aus der verschlossenen Vakuumkammer 20 abzupumpen. Die Vakuumkammer 20 kann über den schwenkbar an der Kammer 20 montierten Deckel 21 luftdicht verschlossen werden. Der Deckel 21 selbst ist aus Designgründen aus Glas gefertigt.

Für das Versiegeln eines eingelegten Beutels dient ein Schweißbalken 22, der sich im Kammerinneren in Auszugsrichtung der Schublade erstreckt. Ein mit Lebensmitteln befüllter Beutel wird zum Vakuumieren in die Kammer eingelegt und der Deckel 21 luftdicht verschlossen. Nach dem Auspumpen der Kammer kann der Beutel mittels des Schweißbalkens 22 versiegelt werden. Dazu wird die zu versiegelnde Beutelöffnung auf dem Schweißbalken 22 abgelegt, der diesen nach dem Vakuumieren gegen eine Andruckstelle drückt und durch Hitzeeinwirkung versiegelt. Der Balken 22 kann entweder an einen am Deckel 21 befestigten Gegendruckbalken oder gegen eine alternative Anpressfläche gepresst werden.

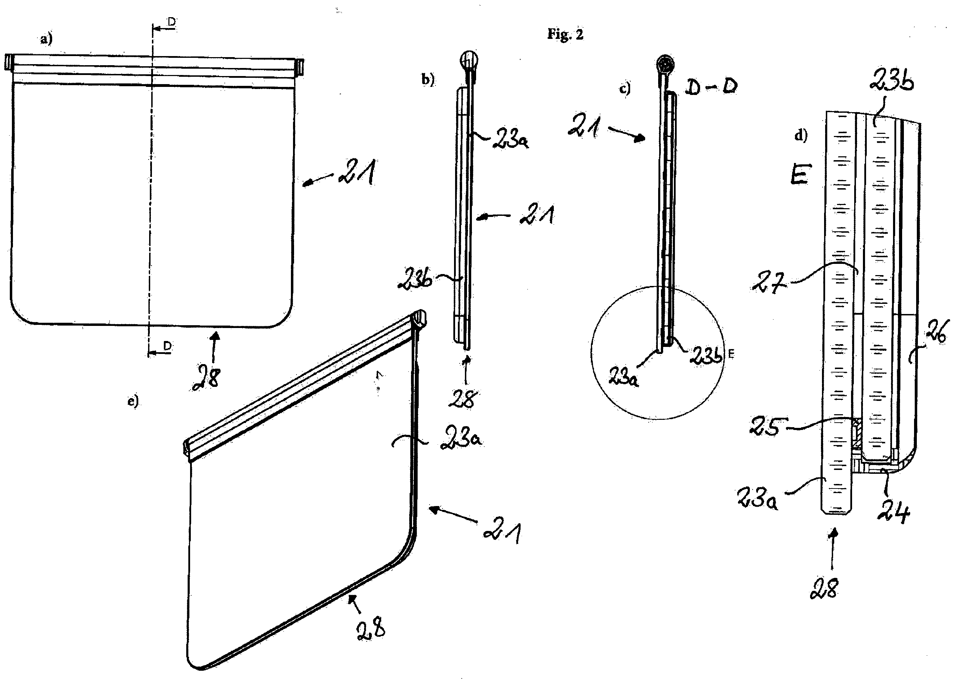

Gegenstand der vorliegenden Erfindung ist die konkrete Deckelkonstruktion, die im Detail den Aufnahmen der Figuren 2a-2e zu entnehmen ist. Figur 2a zeigt eine Draufsicht auf den Deckel 21, die Figur 2b eine Seitenansicht, die Figur 2c eine Schnittdarstellung entlang der Schnittlinie D-D der Figur 2a, Figur 2e eine perspektivischen Seitenansicht und Figur 2d eine Detaildarstellung des in Figur 2c markierten Teilbereichs E.

Bei Verwendung einer einfachen Glasplatte als Deckel 21 kann bei einem Scheibenbruch mit vorherrschendem Vakuum innerhalb der Vakuumkammer 20 eine Implosion auftreten, sodass einzelne Glasstücke aus der Vakuumkammer 20 herausgeschleudert werden können und eine Gefährdung für umstehende Personen bedeuten würden. Aus diesem Grund setzt sich der erfindungsgemäße Deckel 21 aus zwei Glasplatten 23a, 23b zusammen, die flächig überlappend angeordnet sind und deren Flächen maßgeblich die Deckelform bilden. Erkennbar ist, dass die außenliegende Glasscheibe 23a flächenmäßig größer ist und alle Seitenränder der inneren Glasscheibe 23b überragt. Dadurch liegt die äußere Glasplatte 23a beim Schließen des Deckels auf dem Rand der Kammeröffnung der Vakuumkammer 20 auf. Die innenliegende Glasscheibe 23b ist demgegenüber passgenau zur Kammeröffnung gefertigt, so dass diese beim Schließen des Deckels geringfügig in den Kammerraum abgesenkt werden kann.

Beide Glasplatten 23a, 23b sind über mehrere Abstandsprofile 25 beabstandet zueinander und flächig überlappend angeordnet. Die gegenseitige Fixierung kann entweder durch flächiges Verkleben der Platten 23a, 23b oder durch einen vakuumierten Hohlraum 27 zwischen den Glasplatten 23a, 23b erfolgen. Eine Mischung aus beiden Fixierungsvarianten ist selbstverständlich auch möglich.

Die Innenfläche der inneren Glasplatte 23b kann zusätzlich verkleidet sein, was in den Figuren durch das Bezugszeichen 26 angedeutet ist. Diese Verkleidung kann zugleich als Anpressstelle für den Schweißbalken 22 dienen und ebenfalls mit der Glasplatte 23b flächig oder punktuell verklebt sein.

Durch die beabstandete Anordnung der Glasplatten 23a, 23b entsteht randseitig am Deckel 21 eine Nut, in die ein geeignetes Klemmprofil in Form der Dichtlippe 24 eingeklemmt werden kann und dadurch ein luftdichtes Verschließen der Vakuumkammer 22 ermöglicht. Die Dichtlippe 24 ragt nicht nur in die zwischen den Platten 23a, 23b gebildete Nut, sondern deckt ebenfalls den Rand der Verkleidung 26 ab.

Der Deckel 21 weist an einer Querseite ein rohrartiges Profil 40 zur Aufnahme von Drehscharnieren 50 für die schwenkbare Deckelmontage am Kammerkorpus 20 auf. Die gegenüberliegende Querkante 28 des Deckels 21 weist gerundete Ecken auf, wobei beide Glasplatten 23a, 23b als auch die Verkleidung 26 entsprechend abgerundet sind.

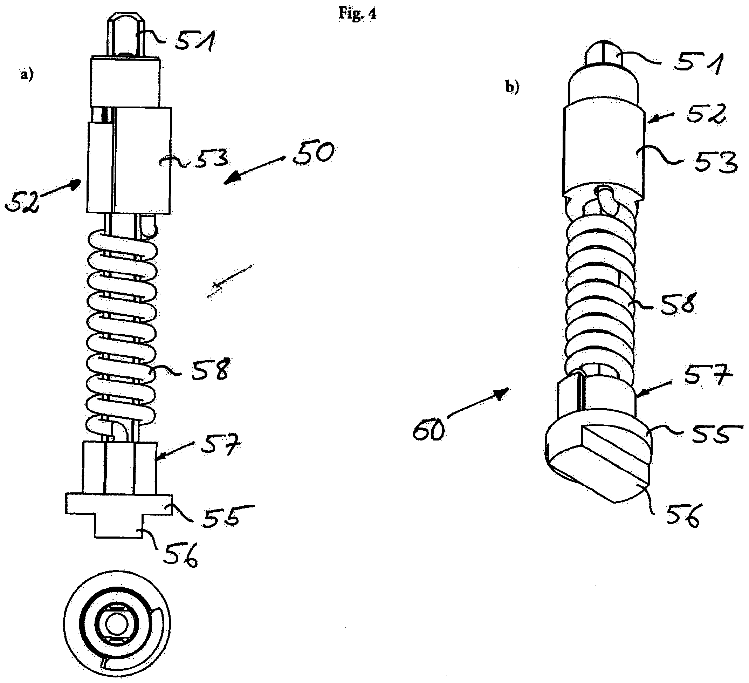

Das rohrförmige Profil 40 erstreckt sich über die gesamte Länge der Querkante und hat endseitig Öffnungen 41, um pro Öffnung 41 genau ein Drehscharnier 50 in das Profil 40 einzuführen. Einzeldarstellungen des Profils 40 sind in den Figuren 4a bis 4d dargestellt, wobei Figur 4a einen Blick auf die Stirnseite des Profils 40, Figur 4b eine Vorderansicht aus der Richtung der montierbaren Glasplatten 23a, 23b und die Figuren 4c, 4d perspektivische Ansichten von oben und unten zeigen.

Erkennbar ist die rohrartige Struktur des Profils 40, an dessen Außenumfang zwei parallel verlaufende Flanken 42 verlaufen und eine Nut zur Aufnahme der außenliegenden Glasplatte 23a bilden, diese passgenau mit ihrer Querkante in die Nut gesteckt werden kann. Die Fixierung kann allein durch Klemmung oder zusätzliche Verklebung, etc. erfolgen.

Das rohrförmige Profil 40 ist beidseitig geöffnet, sodass rechts und links jeweils ein Drehscharnier 50 in die Öffnungen 41 gesteckt werden kann. Die Öffnungen 41 sind prinzipiell kreisförmig, sehen jedoch eine zusätzliche Ausfräsung 43 für einen Mitnehmer 53 des Drehscharniers vor, wodurch eine drehfeste Verbindung zwischen Drehscharnier 50 und Profil 40 erreicht wird.

Einzelaufnahmen des eingesetzten Drehscharniers 50 zeigen die Figuren 4a, 4b. Der Aufbau der Drehscharniere 50 setzt sich aus der Welle 51 zusammen, auf der endseitig, das heißt auf dem innerhalb des Profils 40 liegenden Wellenende eine Hülse 52 drehbar zur Welle 51 auf dieser gelagert ist. Die Hülse 52 umfasst einen Mitnehmer 53, der passgenau zur Ausfräsung 43 der Öffnung 41 ist und dadurch für eine drehfeste Lagerung der Hülse innerhalb der Öffnung 41 sorgt, während die Welle 51 relativ drehbar zum Profil 40 verbleibt. Am entgegengesetzten Wellenende 51 sitzt der Scharnierkopf 55 mit einem Längssteg 56. Mittels des Längsstegs 56 kann das Scharnier 50 in eine passende am Kammerkorpus installierte Lasche eingehängt werden, so dass der Kopf 55 zwar drehfest mit dem Korpus verbunden ist, jedoch lösbar zur einfachen Deckelmontage eingehängt ist. Der Scharnierkopf 55 weist an seiner der Öffnung 41 zugewandten Seite einen ringförmige Ausformung 57 auf, um den Scharnierkopf 55 drehfest auf der Welle 51 zu fixieren. Die Hülse 52 und die Ausformung 57 sind über die Feder 58 verbunden, so dass bei einer Scharnierbewegung oder der damit verbundenen Relativbewegung von Hülse 52 und Scharnierkopf 55 gegen oder mit der Federkraft der Feder 58 gearbeitet wird. Das Drehscharnier 50 ist folglich federgestützt.

Der Außendurchmesser der ringförmige Ausformung 57 ist kleiner als der Öffnungsdurchmesser des Profils 40, so dass die Ausformung 57 in die Öffnung 41 eingeschoben werden kann bis der Kopf 55 an der Stirnseite des Profils 40 anschlägt. Dadurch ergibt sich ein axiales Spiel der eingesetzten Drehscharniere 50, so dass diese einfach aus den zugeordneten Laschen am Kammerkorpus ausgehängt werden können.

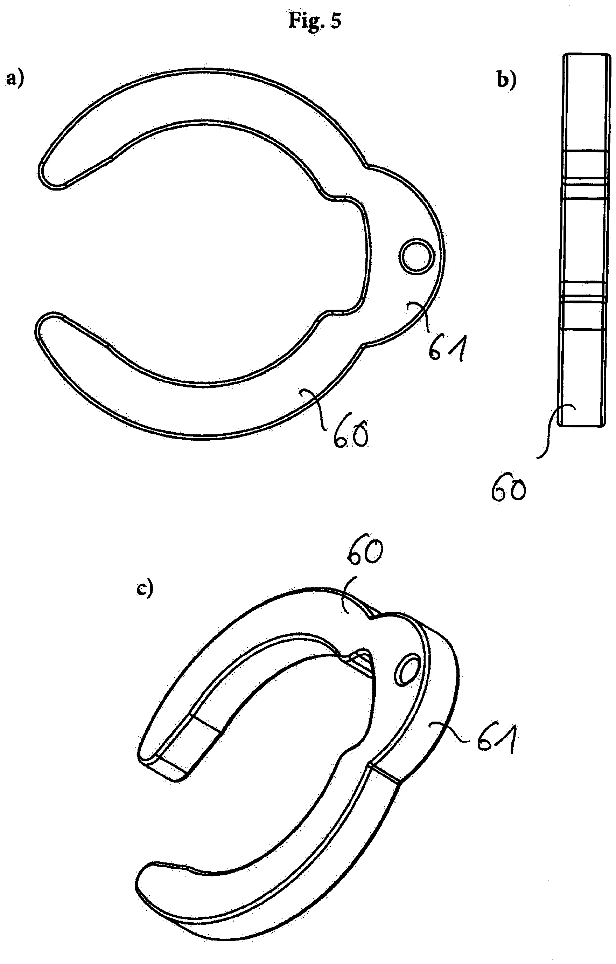

Um ein unbeabsichtigtes Aushängen zu vermeiden, kann auf die Ausformung 57 das in den Figuren 5a, 5b, 5c gezeigte Gleitstück 60 aufgesteckt werden. Sitzt das Gleitstück auf der Ausformung 57, kann diese nicht mehr in die Öffnung 41 eingeschoben werden. Profil 40, Scharniere 50 und der Abstand der Laschen ist dabei derart dimensioniert, so dass der Deckel bei beidseitig auf die Ausformungen 57 aufgesteckten Gleitstücke 60 passgenau in den Laschen eingehängt werden kann.

Das in Figur 5 gezeigte klammerartige Gleitstück 60 weist rückseitig am Gleitstück 60 eine griffartige Auswölbung 61 auf, um das Gleitstück 60 einfach greifen und von der Ausformung 57 abziehen zu können.

## Patentansprüche

1. Vakuumschublade zum Vakuumieren von Lebensmitteln mit einer Vakuumkammer (20), die durch einen betätigbaren Deckel (21) luftdicht verschließbar ist, wobei der Deckel (21) zumindest teilweise aus Glas besteht,
**dadurch gekennzeichnet,**
**dass** der Glasanteil des Deckels (21) einen Verbund von zwei oder mehreren Glasscheiben (23a, 23b) umfasst, die zumindest teilweise flächig überlappend angeordnet sind.

2. Vakuumschublade nach Anspruch 1, **dadurch gekennzeichnet, dass** die Glasscheiben (23a, 23b) beabstandet zueinander angeordnet sind, insbesondere durch Einfügen ein oder mehrerer Abstandsprofile (25) und/oder Verkleben der Glasscheiben (23a, 23b), insbesondere mittels doppelseitigem Klebeband mit entsprechender Stärke.

3. Vakuumschublade nach einem der vorhergehenden Ansprüche, **dadurch gekennzeichnet, dass** die Glasscheiben (23a, 23b) flächig, punktuell oder über eine Klebekontur am Rand miteinander verklebt sind.

4. Vakuumschublade nach einem der vorhergehenden Ansprüche, **dadurch gekennzeichnet, dass** zwischen den Glasscheiben (23a, 23b) zumindest bereichsweise ein Vakuum zur Fixierung der Glasscheiben (23a, 23b) und/oder ein inertes Gas vorgesehen ist.

5. Vakuumschublade nach einem der vorhergehenden Ansprüche, **dadurch gekennzeichnet, dass** am Rand des Glasscheibenverbundes wenigstens eine Nut zur Aufnahme wenigstens einer Dichtung, insbesondere Lippendichtung (24) vorgesehen ist.

6. Vakuumschublade nach Anspruch 5, **dadurch gekennzeichnet, dass** die Nut durch die beabstandete Anordnung der Glasscheiben (23a, 23b) gebildet ist.

7. Vakuumschublade nach einem der vorhergehenden Ansprüche, **dadurch gekennzeichnet, dass** der Deckel (21) über wenigstens ein Drehscharnier (50) an dem Vakuumkammerkorpus (20) angelenkt ist.

8. Vakuumschublade nach Anspruch 7, **dadurch gekennzeichnet, dass** der feststehende Teil des wenigstens einen Drehscharniers (50) lösbar durch wenigstens eine Lasche des Kammerkorpus (20) aufgenommen ist.

9. Vakuumschublade nach Anspruch 8, **dadurch gekennzeichnet, dass** das Drehscharnier (50) aufgrund eines axialen Spiels in Richtung der Rotationsachse aus der Lasche entnehmbar ist.

10. Vakuumschublade nach Anspruch 9, **dadurch gekennzeichnet, dass** ein lösbarer Gleiteinsatz im Bereich der Drehscharnierbefestigung am Deckel (21) vorgesehen ist, um das axiale Spiel zumindest teilweise zu begrenzen.

11. Vakuumschublade nach einem der vorhergehenden Ansprüche, **dadurch gekennzeichnet, dass** randseitig am Verbund der Gasscheiben (23a, 23b) ein rohrartiges Profil (40) befestigt ist, dass koaxial zur Drehachse verläuft und endseitig eine Aufnahme für wenigstens ein Drehscharnier (50) aufweist, insbesondere beidseitig entsprechende Aufnahmen umfasst.

12. Vakuumschublade nach Anspruch 11, **dadurch gekennzeichnet, dass** das rohrartige Profil (40) zwei parallel abstehende Flanken (42) zur Ausbildung einer Aufnahme für wenigstens eine Glasscheibe (23a) umfasst.

13. Verwendung einer Vakuumschublade gemäß einem der Ansprüche 1 bis 12 für ein Möbel, insbesondere für ein Küchenmöbel.

14. Küchenmöbel mit einer Vakuumschublade gemäß einem der Ansprüche 1 bis 12.

## Claims

1. A vacuum drawer for vacuumizing food products with a vacuum chamber (20), which can be closed airtight by an actuatable lid (21), wherein the lid (21) consists at least partly of glass,
**characterized in that**
the glass part of the lid (21) includes two or more laminated glass panes (23a, 23b), which are arranged to at least partly overlap each other in a planar manner.

2. The vacuum drawer according to claim 1, **characterized in that** the glass panes (23a, 23b) are arranged at a distance to each other, in particular by inserting one or more spacer profiles and/or by bonding the glass panes (23a, 23b), in particular by means of double-sided adhesive tape of corresponding thickness.

3. The vacuum drawer according to any of the preceding claims, **characterized in that** the glass panes (23a, 23b) are bonded to each other planarly, point by point or via an adhesive contour at the edge.

4. The vacuum drawer according to any of the preceding claims, **characterized in that** a vacuum for fixing the glass panes (23a, 23b) and/or an inert gas at least partly is provided between the glass panes (23a, 23b).

5. The vacuum drawer according to any of the preceding claims, **characterized in that** at least one groove is provided for accommodating at least one seal, in particular lip seal (24), at the edge of the glass pane laminate.

6. The vacuum drawer according to claim 5, **characterized in that** the groove is formed by the spaced arrangement of the glass panes (23a, 23b).

7. The vacuum drawer according to any of the preceding claims, **characterized in that** the lid (21) is articulated to the vacuum chamber body (20) via at least one rotary hinge (50).

8. The vacuum drawer according to claim 7, **characterized in that** the stationary part of the at least one rotary hinge (50) is releasably accommodated by at least one tab of the chamber body (20).

9. The vacuum drawer according to claim 8, **characterized in that**, due to an axial clearance, the rotary hinge (50) can be removed from the tab in the direction of the rotational axis.

10. The vacuum drawer according to claim 9, **characterized in that** a releasable sliding insert is provided in the region of the attachment of the rotary hinge to the lid (21), in order to at least partly limit the axial clearance.

11. The vacuum drawer according to any of the preceding claims, **characterized in that** at the edge of the laminated glass panes (23a, 23b), a tubular profile (40) is attached, which extends coaxially to the axis of rotation and, at its end, comprises a receptacle for at least one rotary hinge (50), in particular includes corresponding receptacles on both sides.

12. The vacuum drawer according to claim 11, **characterized in that** the tubular profile (40) comprises two flanks (42) protruding in parallel to form a receptacle for at least one glass pane (23a).

13. Use of a vacuum drawer according to any of claims 1 to 12 for a piece of furniture, in particular for a kitchen cabinet.

14. A kitchen cabinet with a vacuum drawer according to any of claims 1 to 12.

## Revendications

1. Tiroir à vide pour la mise sous vide de denrées alimentaires doté d'une chambre à vide (20) qui peut être fermée de manière étanche à l'air par un couvercle actionnable (21), ledit couvercle (21) étant composé de verre, du moins en partie,
**caractérisé en ce que**
la part de verre dans le couvercle (21) se compose d'un ensemble de deux ou plusieurs vitres en verre (23a, 23b) placées en superposition plane, du moins en partie.

2. Tiroir à vide selon la revendication 1, **caractérisé en ce que** les vitres en verre (23a, 23b) sont espacées l'une par rapport à l'autre ou les unes par rapport aux autres, en particulier par l'insertion d'un ou plusieurs profilés d'espacement (25) et/ou l'encollage des vitres en verre (23a, 23b), en particulier au moyen d'un ruban adhésif double face d'une épaisseur adaptée.

3. Tiroir à vide selon l'une quelconque des revendications précédentes, **caractérisé en ce que** les vitres en verre (23a, 23b) sont collées l'une à l'autre ou les unes aux autres sur toute la surface, ponctuellement ou par un contour de collage sur la périphérie.

4. Tiroir à vide selon l'une quelconque des revendications précédentes, **caractérisé en ce qu'**un vide et/ou un gaz inerte est ou sont prévus entre les vitres en verre (23a, 23b), au moins partiellement, afin de fixer les vitres en verre (23a, 23b).

5. Tiroir à vide selon l'une quelconque des revendications précédentes, **caractérisé en ce qu'**au moins une rainure est prévue sur le bord de l'ensemble des vitres en verre pour recevoir au moins un joint d'étanchéité, en particulier un joint à lèvres (24).

6. Tiroir à vide selon la revendication 5, **caractérisé en ce que** la rainure est formée par l'espacement aménagé entre les vitres en verre (23a, 23b).

7. Tiroir à vide selon l'une quelconque des revendications précédentes, **caractérisé en ce que** le couvercle (21) est articulé au moyen d'au moins une charnière tournante (50) sur le corps de la chambre à vide (20).

8. Tiroir à vide selon la revendication 7, **caractérisé en ce que** la partie fixe d'au moins une charnière tournante (50) est logée de manière à pouvoir être détachée par au moins une languette du corps de la chambre (20).

9. Tiroir à vide selon la revendication 8, **caractérisé en ce que** la charnière tournante (50) peut être retirée de la languette grâce à un jeu axial dans le sens de l'axe de rotation.

10. Tiroir à vide selon la revendication 9, **caractérisé en ce qu'**un insert de glissement amovible est prévu dans la zone de la fixation de la charnière tournante sur le couvercle (21) afin de limiter, au moins en partie, le jeu axial.

11. Tiroir à vide selon l'une quelconque des revendications précédentes, **caractérisé en ce qu'**un profil de forme tubulaire (40) est fixé sur le bord de l'ensemble des vitres en verre (23a, 23b), s'étire coaxialement par rapport à l'axe tournant et présente à son extrémité un logement destiné à recevoir au moins une charnière tournante (50), en particulier des logements adaptés des deux côtés.

12. Tiroir à vide selon la revendication 11, **caractérisé en ce que** le profilé de forme tubulaire (40) comprend deux flancs parallèles et proéminents (42) pour former un logement destiné à recevoir au moins une vitre en verre (23a).

13. Utilisation d'un tiroir à vide conformément à l'une des revendications 1 à 12 pour un meuble, en particulier pour un meuble de cuisine.

14. Meuble de cuisine avec un tiroir à vide conformément à l'une des revendications 1 à 12.
